# DEMANDE DE BREVET EUROPEEN

(11) **EP 0 639 421 A1**
(43) Date de publication de la demande: **22.02.1995**
(21) Numéro de dépôt: 94112723.5
(22) Date de dépôt: 16.08.1994
(51) Int. Cl.: B23H 7/30, B23H 1/04

(54) **Electrodes outil rotatives de formes simples pour électro-érosion selon trois dimensions**

(30) Priorité: 19.08.1993 CH 2470/93
(71) Demandeur: CHARMILLES TECHNOLOGIES S.A., CH-1217 Meyrin 1 (CH)
(72) Inventeur: Diot,Jean-Claude, F-74140 Douvaines (FR); Zaugg,Willi, F-01170 Echenevex (FR); Naville,Gérald, F-74930 Reigner (FR)

(57) **Abrégé**

Électrode-outil pour fraisage EDM par couches comprenant un tube conducteur de l'électricité; le rapport de l'épaisseur de sa paroi à son diamètre intérieur est de préférence compris entre 1/10 et 1/3; elle peut être cylindrique, ou présenter une section triangulaire ou carrée, par exemple, ou de tout autre profil décrivant un cercle lorsque l'électrode est mise en rotation. Elle peut être remplie au moins partiellement d'un matériau s'usant plus rapidement que celui du tube proprement dit.

Elle permet de programmer des chemins d'outil selon une grille avec un pas égal à son diamètre intérieur, la cavité ou le relief à éroder étant décomposé virtuellement selon une superposition de feuillets parallèles dont l'épaisseur est égale ou inférieure a celle de sa paroi, et de simplifier la simulation de la variation de la prise de matière et de la vitesse d'usinage le long de la trajectoire en utilisant pour la pointe de l'électrode-outil virtuelle une forme aussi simple qu'un cylindre de rayon égal à son rayon extérieur (ou à ce rayon extérieur augmenté du gap d'usinage)

## Description

La présente invention a trait à des électrodes-outil pour un usinage par électro-érosion (EDM) dans lequel on usine une cavité ou un relief à trois dimensions en évidant la pièce à grande vitesse et par couches successives (c.à.d. par "peelpocketing") avec une électrode-outil rotative, de forme simple et indépendante de la cavité à éroder, appelé "fraisage EDM par couches". On évite la fastidieuse conception et fabrication d'électrodes de forme complexes grâce à une décomposition automatique de la géométrie et à une simulation de l'usinage.

Cette méthode de fraisage EDM par couches avec compensation de l'usure des électrodes a déjà été décrite dans la demande européenne EP 555818 de la demanderesse. Il s'agit d'un usinage à fort taux d'usure, dans lequel la longueur d'électrodes-outil de forme simple diminue rapidement, mais sans usure latérale apparente. On compense l'usure longitudinale de l'électrode-outil par une avance additionnelle régulière selon son axe, dirigée bien sûr vers la pièce et correspondant à une valeur théorique de cette usure. La valeur de cette avance est déduite par calcul à partir de données technologiques préexistantes et de la géométrie de l'électrode-outil, de manière à maintenir l'extrémité active de l'électrode-outil parallèle au plan de la couche à évider. De plus, la géométrie du volume tridimensionnel à évider a été mémorisée sous forme d'une superposition de feuillets (ou couches) virtuelles parallèles. L'extrémité active de l'électrode-outil décrit des mouvements de va-et-vient, ou autres, dans le plan de chacun de ces feuillets, de manière à les éroder successivement jusqu'au fond de la cavité à usiner.

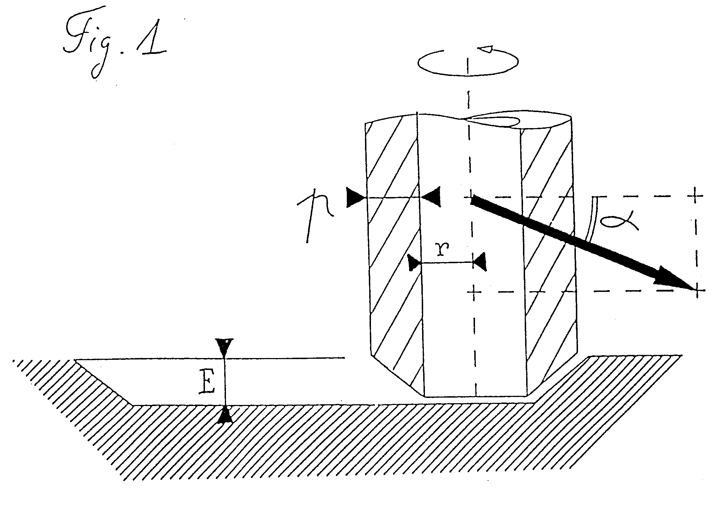

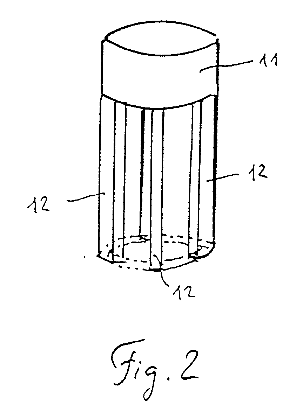

Le fraisage EDM par couches étant un usinage à fort taux d'usure, la demanderesse a choisi dans un premier temps d'utiliser des électrodes pleines, en particulier des électrodes cylindriques, plutôt que des tubes creux; ce choix correspondait à l'état de la technique le plus proche, c'est-à-dire les travaux de Messieurs M. M. Tsuchiya, T. Kaneko and S. Shohda, (en particulier "Three-Dimensionally Controlled EDM Using Column-Shaped Electrode; J. Japan Soc. Electrical-Machining Eng., 1983, 17 (34), 30-42 ").
De plus, les électrodes tubulaires présentaient à priori autant d'inconvénients que d'avantages: en effet, il ne paraissait vraiment pas indiqué d'utiliser un outil tubulaire qui s'use beaucoup plus vite qu'un outil plein malgré son avantage bien connu, à savoir la possibilité de tracer des sillons à fond plat. En effet, comme indiqué dans EP 555818, après une courte phase transitoire l'extrémité active de l'électrode-outil prend un profil invariant dit "forme asymptotique ou stationnaire"; comme illustré en particulier en regard de la figure 2 (reproduite ici à la figure 1), la forme stationnaire dans le cas d'un tube creux rotatif étant un tronc de cône, on peut tracer des sillons à fond plat, ce qui facilite l'érosion par feuillets plans successifs ayant chacun une épaisseur constante. L'autre avantage connu des électrodes-outil tubulaires qui sont surtout utilisées en EDM lorsqu'une bonne irrigation de la zone d'usinage est nécessaire, pour injecter ou pour aspirer le diélectrique par le canal central, par exemple en perçage EDM, n'apporte pas d'amélioration en fraisage EDM, où la cavité usinée est beaucoup plus large que l'outil.

Or de manière inattendue, la demanderesse a trouvé que c'est grâce à l'utilisation d'électrodes tubulaires que la préparation assistée par ordinateur de l'usinage par fraisage EDM par couches, comme décrit dans la demande parallèle (E. 224) devient possible. En effet, cette préparation, que ce soit la programmation des parcours plans à usure nulle de l'outil dans chaque feuillet, ou la compensation de l'usure, ou surtout la simulation de l'usinage par calcul de la prise de matière et programmation de la vitesse d'usinage le long de ces parcours plans, paraissait utopique, difficilement réalisable étant donnée sa complexité suite au cumul de toutes les différences entre la réalité et l'univers ideal de la simulation. Les électrodes tubulaires n'ont donc pas comme seul avantage celui d'usiner des fonds plats; elles ont permis de formuler, sans risque pour la géométrie de la pièce finie, des hypothèses simplificatrices pour réaliser une préparation assistée par ordinateur du fraisage EDM par couches et d'envisager ainsi le calcul d'une prise de matière et d'une vitesse d'usinage théoriques en chaque point de parcours plans à usure nulle.

L' objet de la présente invention est ainsi une électrode-outil pour fraisage EDM par couches constituée par un tube conducteur de l'électricité et creux ou rempli au moins partiellement d'un matériau s'usant plus rapidement que celui du tube proprement dit, comme défini aux revendications 1 à 5. Dans ce dernier cas d'électrode composite, la forme stationnaire est la même que pour le tube creux, par exemple un tronc de cône pour les tubes cylindriques.
Etant employé en rotation, au lieu d'être cylindrique le tube peut avoir une section carrée ou de toute autre forme polygonale. Le terme "tube" recouvre aussi une électrode composée de plusieurs éléments qui décrivent un tube lorsqu'ils sont mis en rotation. Un exemple d'un tel tube "partiel" est illustré à la figure 2; seule l'une des extrémités 11 de l'outil 10 est tubulaire et maintient plusieurs lames 12 parallèles à son axe central, montées à sa périphérie (voir fig. 2).

Un autre objet de la présente invention est l'utilisation d'une telle électrode-outil sur une machine pour fraisage EDM par couches, comme définie aux revendications 6 à 9.

Par ailleurs, il est particulièrement avantageux d'utiliser une électrode-outil de géométrie adaptée à son utilisation en fraisage EDM par couches, car sa géométrie intervient à toutes les étapes de la préparation assistée par ordinateur de cet usinage.
De plus, un tube de n'importe quel diamètre intérieur ou extérieur ou avec une paroi de n'importe quelle épaisseur ne conviendra pas forcément au fraisage EDM par couches; le choix du bon diamètre intérieur ou extérieur et de la bonne épaisseur est le résultat d'un compromis: pour un diamètre extérieur donné, on a intéret à choisir la plus faible épaisseur possible pour obtenir le sillon le plus large possible, sous réserve de garder la stabilité mécanique de l'outil; mais plus la paroi est mince, plus vite s'use l'outil. En général, il est préférable que le rapport de l'épaisseur de la paroi au diamètre intérieur soit compris entre 1/10 et 1/3, mais ceci dépend de la matière constituant le tube.

De plus, afin de simplifier la programmtion, il est avantageux de standardiser les tubes prévus comme électrodes en fraisage EDM par couches, par exemple en définissant un choix restreint de quelques diamètres intérieurs ou/et extérieurs et épaisseurs de paroi possibles, comme pour les diamètres de fil dans le domaine des fils-électrodes.

Reprenons les différentes étapes de la préparation assistée par ordinateur de l'usinage par fraisage EDM par couches, comme elle est décrite dans la demande parallèle (E. 224).

Les paramètres géométriques de l'électrode tubulaire de la présente invention interviennent d'abord dans la décomposition automatique de la géométrie de la pièce en parcours d'outil plans:
- lors du choix de l'épaisseur E du feuillet qui dépend de l'épaisseur de la paroi de l'électrode-outil; en général, elle a au maximum la valeur de l'épaisseur de la paroi du tube et au minimum celle du gap;
- lors de la programmation de l'aire à balayer dans chaque feuillet: le contour fermé correspondant au feuillet est en général décalé automatiquement une première fois vers l'intérieur du volume à éroder d'une valeur égale au rayon R extérieur du tube-électrode plus le gap. Puis un deuxième décalage, égal au rayon r intérieur du tube-électrode, définit cette aire;
- lors de la programmation des grilles de balayage des feuillets: leur pas est avantageusement égal au diamètre intérieur de l'électrode tubulaire.

Les paramètres l'électrode tubulaire interviennent aussi lors de la programmation de la compensation de son usure: la valeur théorique de cette compensation, calculée par le module de compensation d'usure en supposant que son extrémité active est tronconique, dépend de l'épaisseur de sa paroi; elle est en général proportionnelle à l'inverse de cette épaisseur.

Enfin, les paramètres de l'électrode tubulaire interviennent aussi lors de la simulation des vitesses d'usinage le long de sa trajectoire: la forme théorique utilisée pour simuler les variations de la prise de matière et de la vitesse d'usinage en fonction de l'abcisse curviligne est un cylindre de rayon (R + gap), R étant le rayon extérieur de l'électrode tubulaire.
De plus, dans le cas de variantes du module de simulation agencées pour introduire une correction correspondant aux phases transitoires, on sait d'après la demande parallèle (E. 224) que ces phases transitoires sont d'autant plus courtes que la paroi du tube est mince.

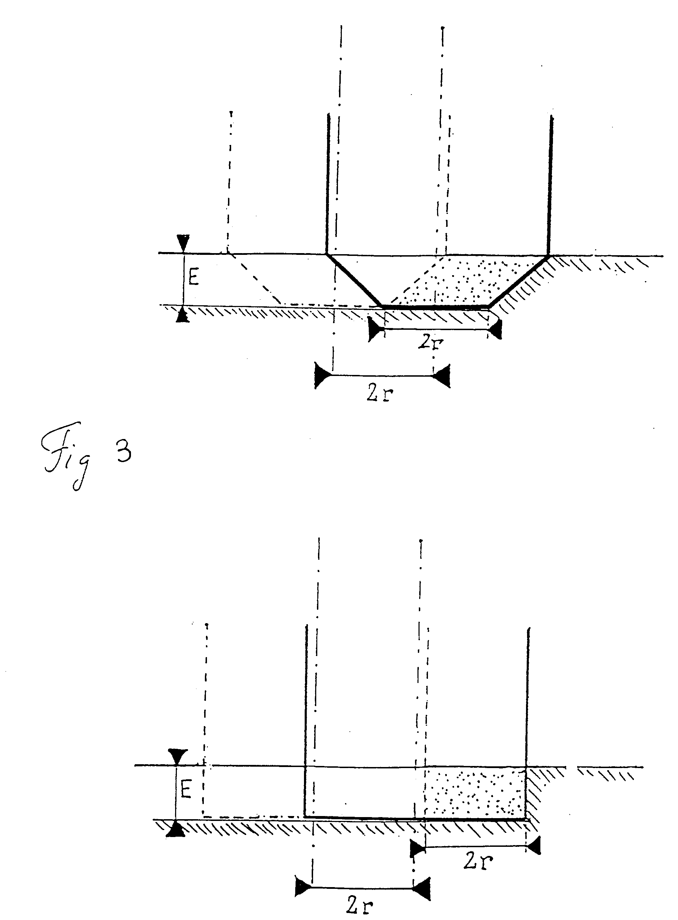

C'est grâce à un avantage inattendu des électrodes tubulaires que la simulation de la variation de la prise de matière et de la vitesse d'usinage le long de la trajectoire peut utiliser une forme aussi simple qu'un cylindre de rayon (R + gap), et donc ne pas tenir compte de la forme tronconique de l'outil. En effet, pour un "pas" de balayage de 2r (r est le rayon intérieur du tube-électrode), que l'on considère la forme tronconique de l'outil ou sa forme cylindrique théorique, la prise de matière latérale a la même valeur: un parallèlogramme ABCD de surface 2r.E pour un outil tronconique, un rectangle EFGH de même surface 2r.E pour un outil cylindrique (voir figure 3).

Signalons également que les phases transitoires observées avec une électrode-outil tubulaire de la présente invention sont beaucoup plus courtes que celles observées avec une électrode-outil en forme de cylindre plein.

Les électrodes-outil tubulaires de la présente invention sont réalisées en métal, par exemple en cuivre, aluminium, laiton, acier, ou en graphite ou en céramique conductrice de l'électricité, par exemple en carbure de silicium, ou en céramique, par exemple de carbure de titane, chargée avec une poudre conductrice de l'électricité.

Le diamètre extérieur de ces électrodes-outil tubulaires est rarement inférieur à 0,5 mm; en effet, les diamètres inférieurs faibles peuvent poser des problèmes car ils manquent de rigidité et les forces d'usinage risquent de les faire flamber et marquer la pièce. Dans la plupart des applications, ce diamètre extérieur ne dépasse pas 20 mm; mais dans certains cas ce diamètre peut être beaucoup plus important. Il est sélectionné en particulier en fonction de la géométrie des aires à éroder.

Le choix de l'épaisseur de la paroi (ou du diamètre intérieur) de ces électrodes-outil tubulaires est en principe indépendant du diamètre extérieur sélectionné. Mais on a expliqué ci-dessus que le rapport de l'épaisseur de la paroi au diamètre intérieur est le résultat d'un compromis. De plus, la combinaison de ce chois avec la sélection du diamètre extérieur détermine la section de l'électrode-outil. Or l'un des critères de choix peut être la surface qu'on désire usiner avec une seule électrode et qui dépend en particulier de la forme du volume à éroder, de l'épaisseur du feuillet considéré, du taux volumique d'usure du régime d'usinage prévu (correspondant à la matière des électrodes pièce et outil et à l'état de surface désiré), de la longueur de l'électrode-outil et de sa section.

La longueur de ces électrodes-outil dépend des dimensions de la machine EDM et de l'éventuel magasin distribuant ces électrodes-outil et du diamètre extérieur sélectionné: plus une électrode est fine, moins elle pourra être longue, vu le risque de flambage mentionné ci-dessus. On peut utiliser le même critères de choix (la surface qu'on désire usiner avec une seule électrode) que ci-dessus.

## Revendications

1. Électrode-outil pour fraisage EDM par couches comprenant un tube, ou des éléments de tube, conducteurs de l'électricité, ces éléments étant agencés pour décrire un tube lorsque l'électriode est mise en rotation.

2. Électrode-outil selon la revendication 1, comprenant un tube dont le rapport de l'épaisseur de la paroi au diamètre intérieur est compris entre 1/10 et 1/3.

3. Électrode-outil selon la revendication 1, comprenant un tube cylindrique.

4. Électrode-outil selon la revendication 1, constituée par un tube rempli au moins partiellement d'un matériau s'usant plus rapidement que celui du tube proprement dit.

5. Électrode-outil selon la revendication 1, réalisée soit en métal, par exemple en cuivre, aluminium, laiton, acier, soit en graphite, soit en céramique conductrice de l'électricité, par exemple en carbure de silicium, soit encore en céramique, par exemple en carbure de titane, chargée avec une poudre conductrice de l'électricité.

6. Utilisation d'une électrode-outil selon l'une des revendications 1 à 5, sur une machine pour fraisage EDM par couches, programmée de manière que la pointe de cette électrode-outil se déplace parallèlement au plan du feuillet à éroder, en traçant dans la matière des sillons adjacents dégageant un fond plat selon un balayage dont la grille a un pas égal au diamètre intérieur de l'électrode-outil utilisée.

7. Utilisation selon la revendication 6, dans laquelle la machine pour fraisage EDM par couches présente un module de décomposition automatique programmé de manière à découper virtuellement la géométrie de la pièce selon une superposition de feuillets parallèles dont l'épaisseur est égale ou inférieure a celle de la paroi de l'électrode-outil utilisée.

8. Utilisation selon la revendication 6, dans laquelle la machine pour fraisage EDM par couches présente un module simulant la variation de la prise de matière et de la vitesse d'usinage le long de la trajectoire d'outil programmé en utilisant pour la pointe de l'électrode-outil virtuelle une forme aussi simple qu'un cylindre de rayon égal au rayon extérieur de l'électrode-outil réelle ou à ce rayon extérieur augmenté du gap d'usinage.

9. Utilisation selon la revendication 6, dans laquelle la machine pour fraisage EDM par couches présente un module compensateur d'usure programmant une avance additionnelle de l'électrode-outil utilisée proportionnelle à l'inverse de l'épaisseur de sa paroi.
